# EUROPÄISCHE PATENTSCHRIFT

(11) **EP 0 641 817 B1**
(45) Veröffentlichungstag und Bekanntmachung des Hinweises auf die Patenterteilung: **27.12.2000**
(21) Anmeldenummer: 94111968.7
(22) Anmeldetag: 01.08.1994
(51) Int. Cl.: C08G 69/44, A61L 17/00, A61L 27/00

(54) **Thermoplastisch verarbeitbare und biologisch abbaubare aliphatische Polyesteramide**
Thermoplastic biodegradable aliphatic polyesteramides
Polyesteramides aliphatiques thermoplastiques biodégradables

(30) Priorität: 12.08.1993 DE 4327024
(43) Veröffentlichungstag der Anmeldung: 08.03.1995
(73) Patentinhaber: BAYER AG, 51368 Leverkusen (DE)
(72) Erfinder: Timmermann, Ralf, Dr., D-47800 Krefeld (DE); Dujardin, Ralf, Dr., D-47877 Willich (DE); Koch, Rainhard, Dr., D-51065 Köln (DE)

(56) Entgegenhaltungen:
- EP-A- 0 030 822
- US-A- 4 343 931
- PATENT ABSTRACTS OF JAPAN vol. 003, no. 142 (C-065), 24.November 1979 & JP-A-54 119594 (AGENCY OF IND SCIENCE & TECHNOL), 17.September 1979,
- PATENT ABSTRACTS OF JAPAN vol. 003, no. 142 (C-065), 24.November 1979 & JP-A-54 119593 (AGENCY OF IND SCIENCE & TECHNOL), 17.September 1979,
- PATENT ABSTRACTS OF JAPAN vol. 003, no. 142 (C-065), 24.November 1979 & JP-A-54 119595 (AGENCY OF IND SCIENCE & TECHNOL), 17.September 1979,
- PATENT ABSTRACTS OF JAPAN vol. 005, no. 071 (C-054), 13.Mai 1981 & JP-A-56 022324 (AGENCY OF IND SCIENCE & TECHNOL), 2.März 1981,

## Beschreibung

Die Erfindung betrifft thermoplastisch verarbeitbare aliphatische Polyesteramide, die biologisch abbaubar (kompostierbar) sind.

Bekannt ist, daß aliphatische Polyester sehr gut biologisch abbaubar sind. Allerdings sind es niedrigschmelzende (50 bis 70°C) Wachse ohne ausreichende mechanische Eigenschaften.

Dagegen sind technische Polyamide (z.B. PA 6 und 66) Materialien, die sehr gute mechanische Eigenschaften aufweisen, aber überhaupt nicht biologisch abbaubar sind. (S. Huang, Biodegradation in Comprehensive Polymer Science, Vol. 6, chap. 21, Pergamon Press Oxford 1989).

Polyesteramid-Copolymere sind prinzipiell bekannt (Polyesters in Encyclopedia of Polymer Science and Engineering 2nd Ed. Wiley and Sons New York, Vol. 12 p. 59/60).

Ihre Hauptanwendung sind Schmelzklebstoffe. Dies sind Materialien, die speziell durch Einbau von speziellen langkettigen Carbonsäuren, z.B. Dimerfettsäuren bzw. Mischungen von cycloaliphatischen Diaminen auf niedrige Schmelzpunkte und verzögerte Kristallisation optimiert werden (Bsp. EP 0 027 944). Sie weisen keinerlei mechanische Eigenschaften für die Herstellung von Gebranchsgegenständen auf. Außerdem zeigen sie keine biologische Abbaubarkeit.

Auch biologisch abbaubare Polyesteramide auf Basis natürlicher Aminosäuren sind beschrieben. Allerdings weisen sie keinerlei mechanische Eigenschaften, die für die Herstellung von Gebrauchsgegenstanden notwendig sind, auf Zudem ist ihre Herstellung über eine aufwendige Schutzgruppentechnik, da es sich in der Regel um natürliche Aminosäuren in Kombination mit Hydroxycarbonsäuren handelt, sehr umständlich. Die erreichten Molekulargewichte dieser Polymeren sind nicht besonders hoch und übersteigen selben 10 000 [Polym. Bull. 28 (1992) 301-307].

J. Appl. Polym. Sci. (1979) 1701-1711 beschreibt die Synthese von Copolyamidestern durch Blenden von Polyamid 6 und Polycaprolacton. Der Abbau dieser Materialien wird beschrieben, aber keine Mechanik angegeben. Die Umesterung zwischen diesen beiden Polymeren erfolgt nur sehr langsam und unvollständig. Diese Herstellmethode ist daher zur Produktion von Thermoplasten mit reproduzierbaren Eigenschaften nicht geeignet.

Das J. Appl. Polym. Sci. 27 (1982) 18091822 beschreibt aliphatische Polyesteramide, die über Säurechloride, Diol und Diamin hergestellt werden. Diese Herstellungsweise ist sehr aufwendig. Es ist mit keinem Wort eine biologische Abbaubarkeit bzw. Kompostierbarkeit erwähnt.

EP 0 069 475 beschreibt die Synthese von aliphatischen Polyesteramiden aus Diolen, Dicarbonsäuren und amid-formenden Komponenten. Die Kettenlänge der eingesetzten Dicarbonsäuren beträgt 9 bis 12 C-Atome, die der Aminocarbonsäuren 11 bzw. 12 und der Dicarbonsäuren für das Salz 9 bis 12 C-Atome. Über einen möglichen Abbau wird nichts gesagt.

Biologisch abbaubare Poly(ester-amide) aus Milchsäure, Diaminen und Dicarbonsäuredichloriden (US-Pat. 4 343 931; US-Pat. 4 529 792) bzw. aus Caprolacton und Caprolactam (Jap. Pat. 79 119 593, Jap. Pat. 79 119 594) sind ebenfalls bekannt, sie sind jedoch aufwendig herzustellen.

Die Herstellung von Poly(ester-amiden) durch Umsetzung von säureterminierten aliphatischen Esterprepolymeren mit aromatischen Diisocyanaten ist bekannt (siehe beispielsweise US 4 129 715, EP 0 275 988). Eine biologische Abbaubarkeit dieser Materialien wird jedoch nicht gelehrt.

Hauptproblem der beschriebenen Polyesteramide ist neben der teilweise fehlenden Abbaubarkeit und der sehr aufwendigen Synthese das relativ geringe Molekulargewicht, das man erhalt. Relative Viskositäten gemessen als 0,5 gew.-%ige Lösungen dieser Polymere in m-Kresol von über 2,0 sind bisher nicht beschrieben worden. Diese Molekulargewichte sind aber zum Erreichen guter mechanischer Eigenschaften und für die Verarbeitung z.B. zu Blasfolien unbedingt notwendig.

Übertaschenderweise wurde nun gefungen, daß Polyesteramide mit hohen Molekulargewichten und mit Estergehalten zwischen 30 und 80 Gew.-% leicht und reproduzierbar herstellbar sind sowie gute mechanische Eigenschaften auch zur Herstellung von transparenten Folien und eine gute biologische Abbaubarkeit bzw. Kompostierbarkeit aufweisen.

Das ist umso überraschender, da der biologische Abbau vom Molekulargewicht abhingt und mit zunehmendem Molekulargewicht immer schlechter werden sollte (Kinoshita et. al., Agric. Biol. Chem. 39 (1975) 1219). In unserem Fall führen aber auch sehr hochmolekulare Polyesteramide mit geringen Anteilen an Ester noch zu einem sehr guten biologischen Abbau.

Gegenstand der Erfindung sind kompostierbare thermoplastisch verarbeitbare hochmolekulare Copolymere, die dadurch gekennzeichnet sind, daß sie aliphatische Ester- und aliphatische Amidstrukturen enthalten und Schmelzpunkte von mindestens 75°C aufweisen, der Gewichtsanteil der Esterstrukturen zwischen 30 und 80 %, der Anteil der Amidstrukturen zwischen 70 und 20 % beträgt.

Die erfindungsgemäßen Copolymere haben ein mittleres Molekulargewicht (M_{w} ermittelt nach Gelchromatographie in m-Kresol gegen Standard Polystyrol) von 10 000 bis 300 000, vorzugsweise 20 000 bis 150 000.

1 g der erfindungsgemäßen Copolymere rufen in 250 ml ASTM-Nährsalzlösung bei einem pH-Wert von 6,8, angeimpft mit 2 ml eines Extraktes aus Gartenkompost bei Schwenken mit 220 Upm bei 37°C unter Luftzutritt innerhalb von höchstens zwei Wochen das Wachstum von mindestens 30 mg/l Biomasse hervor und zeigen unter den gleichen Bedingungen innerhalb von höchstens vier Wochen eine Gewichtsabnahme von mindestens 10 Gew.-%.

Die Synthese der erfindungsgemäßen Polyesteramide erfolgt durch Mischen der amid-bzw. esterbildenden Ausgangskomponenten und Polymerisation bei erhöhter Temperatur unter Eigendruck und anschließendem Abdestillieren des Reaktionswassers sowie überschüssiger Monomere im Vakuum und bei erhöhter Temperatur.

Materialien auf Basis abgewandelter Naturstoffe weisen teilweise zwar gute biologische Abbaubarkeit auf, besitzten aber in der Regel keine guten mechanischen Eigenschaften, z.B. Cellulose. Zum Erreichen einer thermoplastischen Verarbeitung zusammen mit guten mechanischen Eigenschaften müssen aber normalerweise Additive, auch Polymere, verwendet werden, die die vollständige biologische Abbaubarkeit erschweren.

Völlig überraschend für den Fachmann ist es, daß Polymere mit so hohen Schmelzpunkten noch einen so guten biologischen Abbau zeigen. In ACS Symp. Ser. 433 (1990) S. 136-148 wird die Abhängigkeit des biologischen Abbaus vom Schmelzpunkt der Polymeren untersucht. Es wurde gefunden, daß Polymere mit einem Schmelzpunkt größer als 75°C keinen nennenswerten Abbau mehr zeigen. Die in der vorliegenden Erfindung beschriebenen Polymere haben aber Schmelzpunkte, die weit über diesen gefundenen Grenzen liegen und einen sehr guten biologischen Abbau zeigen.

Die Anordnung der Ester bzw. Amidsegmente erfolgt schon allein durch die Synthesebedingungen rein statistisch, d.h. diese Verbindungen sind nicht als thermoplastische Elastomere sondern als Thermoplaste zu bezeichnen.

Die Struktur von thermoplastischen Elastomeren wird in der Fachliteratur mit "gleichzeitigem Vorliegen weicher und elastischer Segmente mit hoher Dehnbarkeit und niedriger Glastemperatur (T_{g}-Wert) sowie harter und kristallisierbarer Segmente mit geringer Dehnbarkeit, hohem T_{g}-Wert und der Neigung zur Assoziatbildung (Vernetzung)" (W. Hofmann, "Thermoplastische Elastomere - Stoffklassen und Versuch einer Klassifikation", Kunststoffe 77 (1987) 767 bis 776) beschrieben.

Diese Segmentanordnung ist nicht gegeben.

Allerdings sind auch Blockcopolymere mit Ester- und Amidstrukturen, die die erfindungsgemäße Zusammensetzung haben, kompostierbar. Ihre Synthese ist aber bedeutend aufwendiger (Castaldo et. al., J. Appl. Polym. Sci. 27 (1982) 1809-1822).

Die bei der erfindungsgemäßen Synthese verwendeten Monomere können aus folgenden Gruppen stammen:
Dialkohole wie Ethylenglykol, 1,4-Butandiol, 1,3-Propandiol, 1,6-Hexandiol, Diethylenglykol u.a.
und/oder Dicarbonsäure wie Oxalsäure, Bernsteinsäure, Adipinsäure u.a. auch in Form ihrer jeweiligen Ester (Methyl-, Ethyl- usw.)
und/oder Hydroxycarbonsäuren und Lactone wie Caprolacton u.a.
und/oder Aminoalkohole wie Ethanolamin, Propanolamin usw.
und/oder cyclische Lactame wie ε-Caprolactam oder Laurinlactam usw.
und/oder ω-Aminocarbonsäuren wie Aminocapronsäure usw.
und/oder Mischungen (1:1 Salze) aus Dicarbonsäuren wie Adipinsäure, Bernsteinsäure usw. und Diaminen wie Hexamethylendiamin, Diaminobutan usw.
enthalten.

Ebenso können sowohl hydroxyl- oder säureterminierte Polyester mit Molekulargewichten zwischen 200 und 10 000 als esterbildende Komponente eingesetzt werden.

Die Synthese kann sowohl nach der "Polyamid-methode" durch stöchiometrisches Mischen der Ausgangskomponenten gegebenenfalls unter Zusatz von Wasser und anschließendes Entfernen von Wasser aus dem Reaktionsgemisch als auch nach der "Polyester-methode" durch Zugabe eines Überschusses an Diol mit Veresterung der Säuregruppen und nachfolgender Umesterung bzw. Umamidierung dieser Ester erfolgen. In diesem zweiten Fall wird neben Wasser auch der Überschuß an Glykol wieder abdestilliert.

Bevorzugt werden bei der Synthese Caprolactam, Diol und Dicarbonsäure in der gewünschten Stöchiometrie gemischt.

Die erfindungsgemäßen Polyesteramide können weiterhin 0,1 bis 5 Gew.-%, bevorzugt 0,1 bis 2 Gew.-% an Verzweigern enthalten. Diese Verzweiger können z.B. trifunktionelle Alkohole wie Trimethylolpropan oder Glycerin, tetrafunktionelle Alkohole wie Pentaerythrit, trifunktionelle Carbonsäuren wie Citronensäure sein. Die Verzweiger erhöhen die Schmelzviskosität der erfindungsgemäßen Polyesteramide soweit, daß Extrusionsblasformen mit diesen Polymeren möglich wird. Der biologische Abbau dieser Materialien wird dadurch nicht behindert.

Erfindungsgemäße aliphatische Polyesteramide haben Esteranteile zwischen 35 und 80 Gew.-%, enthaltend aliphatische Dialkoholen mit einer Kettenlange von C₂-C₁₂, bevorzugt C₂-C₆, aliphatische Dicarbonsäuren oder deren Ester mit einer Kettenlänge von C₂-C₁₂, bevorzugt C₂-C₆, ω-Aminocarbonsäuren mit einer Kettenlänge von C₁-C₁₂, bevorzugt C₄-C₆ bzw. cyclischen Lactamen mit einer Ringgröße von C₅-C₁₂, bevorzugt C₆-C₁₁ bzw. einem 1:1-Salz aus aliphatischer Dicarbonsäure und aliphatischem Diamin mit einer Kettenlänge von C₄-C₁₂, bevorzugt C₄-C₆, mit gegebenenfalls 0,01 bis 5 Gew.-%, bevorzugt 0,01 bis 2 Gew.-% an Verzweiger. Sie haben einen Schmelzpunkt von mehr als 75°C und ein Molekulargewicht M_{w} >30 000.

Das Biomassewachstum auf dem Polymeren beträgt mindestens 30 mg/l innerhalb von 2 Wochen.

Bei der Herstellung werden die amid- bzw. esterbildenden Ausgangskomponenten miteinander gemischt und bei erhöhter Temperatur gegebenenfalls unter Eigendruck polymerisiert und im Vakuum und bei erhöhter Temperatur das Reaktionswasser sowie überschüssige Monomere abdestilliert.

Die aliphatischen Polyesteramide haben Esteranteile zwischen 35 und 65, besonders bevorzugt 35 und 55 Gew.-% aliphatische Polyester.

Die aliphatischen Polyesteramide haben vorzugsweise als cyclisches Lactam Caprolactam und als esterbildene Komponenten 1,4-Butandiol und Adipinsäure.

Die aliphatischen Polyesteramide können aus dein 1:1 Salz aus aliphatischer Dicarbonsäure und aliphatischem Diamin, vorzugsweise dem "AH-Salz" aus Adipinsäure und 1,6-Hexamethylendiamin hergestellt werden.

Bevorzugte aliphatische Polyesteramide enthalten als Aminocarbonsäurebaustein die 6-Aminohexansäure.

Die aliphatischen Polyesteramide können als Zusatzstoffe von 0 bis 50 Gew.-% anorganische oder organische Füll- bzw. Verstärkungsstoffe, mineralische Füllstoffe, UV-Stabilisatoren, Antioxidantien, Pigmente, Farbstoffe, Nukleiermittel, Kristallisationsbeschleuniger bzw. -verzögerer, Fließhilfsmittel, Gleitmittel, Entformungsmittel, Flammschutzmittel sowie modifizierte bzw. nicht modifizierte Kautschuke enthalten.

Die aliphatischen Polyesteramide können zur Herstellung von biologisch abbaubaren oder kompostierbaren Formkörpern wie Folien, Fasern, Spritzgußartikel usw. verwendet werden sowie als Trennmittel, Weichmacher, Beschichtungsmaterial, Klebstoff etc.

Die Polykondensation kann weiterhin durch den Einsatz von bekannten Katalysatoren beschleunigt werden. Sowohl die bekannten Phosphorverbindungen, die die Polyamidsynthese beschleunigen als auch saure Katalysatoren und Salze wie Oxide, Acetate von Mg, Zn, Ca usw. für die Veresterung wie auch Kombinationen aus den beiden sind zur Beschleunigung der Polykondensation möglich.

Die Katalysatoren dürfen die Kompostierbarkeit allerdings nicht beeinflussen.

Weiterhin kann die Polykondensation durch die Verwendung von Lysin oder Lysinderivaten beeinflußt werden, das sowohl die Kondensation beschleunigt als auch zu verzweigten Produkten führt (siehe DE3 831 709 zur Beschleunigung der Polyamidkondensation durch Lysin und Lysinderivaten).

Die erfindungsgemäßen kompostierbaren thermoplastisch verarbeitbaren Kunststoffe können gegebenenfalls mit üblichen Additiven wie beispielsweise Weichmachern, Schlagzähmodifikatoren, Flammschutzmitteln, Hydrophobierungsmitteln, Nukleierungsmitteln und/oder anderen Mitteln ausgerüstet werden, wobei bei den kompostierbaren Materialien darauf zu achten ist, daß die Kompostierbarkeit nicht beeinträchtigt wird.

Die erfindungsgemäßen thermoplastisch verarbeitbaren Polyesteramide können alleine oder mit den genannten Additiven versetzt, mit üblichen Füllstoffen gefüllt werden, wobei bei den kompostierbaren Materialien auch hierbei darauf zu achten ist, daß die Kompostierbarkeit durch diese Zusätze nicht beeinträchtigt wird. Geeignet ist z.B. Talkum.

Die erfindungsgemäßen Copolymeren können beispielsweise zu Folien verarbeitet werden und vorteilhafterweise als kompostierbare Müllbeutel oder Milchfolien eingesetzt werden. Ebenso können sie beispielsweise in üblicher Weise zu Formkörpern spritzgegossen werden, die nach dem Gebrauch kompostiert werden können.

Ebenso ist die Verwendung als Beschichtungsmaterial z.B. auf Papier oder Cellulosevlies und als Klebstoff oder Leim z.B. in Laminaten möglich. Auch eine Verwendung als Trennmittel, Weichmacher und ähnlichen Anwendungen ist möglich.

Weitere Verwendungsmöglichkeiten sind im Bereich Fasern und Filamente denkbar.

### Beispiele

Die erfindungsgemäße Eigenschaft der biologischen Abbaubarkeit bzw. Kompostierbarkeit wird wie folgt definiert:
Die zu testenden Polymere werden in einem Flüssigmedium nach ASTM G22 (Zusammensetzung Tab. 1) mit einer Mischung von Mikroorganismen aus Gartenkompost unter Schwenken (220 upm) und Luftzutritt bei 37°C inkubiert. Hierzu wird ca. 1 g des Polymeren in mehreren cm²-großen Stücken in 250 ml Nährsalz-Lösung in 1l Erlenmeyerkolben mit 2 ml einer Suspension von 10 g Gartenkompost m 100 ml Nährsalzlösung beimpft. Aus der Kompostsuspension werden vorher grobe Teile über ein Feinsieb abgetrennt. Der Trockensubstanz(TS)-Gehalt der Animpfmenge beträgt dann ca. 50 mg. Als Kontrolle zur Messung des abiotischen Gewichtsverlustes der Polymerprobe wird ein Ansatz mit HgCl₂ (500 mg/l) versetzt. Weitere Kontrollansätze enthalten Cellulose (4 g/l, Typ DP 500, Fa. Wolff Walsrode) zur Überprüfung des Wachstums mit einem natürlichen Substrat bzw. werden ohne Zusatz einer C-Quelle zur Bestimmung des Hintergrundwachstums und der TS-Abnahme des Inokulums angesetzt.

**Tabelle 1**

| Zusammensetzung der Nährsalzlösung nach ASTM G22 | |
|---|---|
| KH₂PO₄ | 0,7 g |
| K₂HPO₄ | 0,7 g |
| MgSO₄7H₂O | 0,7 g |
| NH₄NO₃ | 1,0 g |
| NaCl | 0,005 g |
| FeSO₄ 7H₂O | 0,002 g |
| ZnSO₄ 7H₂O | 0,002 g |
| MnSO₄ H₂O | 0,001 g |
| H₂O dest. | 1000 g |

Zur Bestimmung des TS-Gehaltes der wasserlöslichen Anteile (Polymer bzw. Polymerreste, Biomasse und Inokulum) wird der gesamte Inhalt eines Kolbens abzentrifugiert, einmal in 0,05 m Phosphatpuffer gewaschen und der unlösliche Rest bei 80°C mindestens 48 h getrocknet. In Parallelkolben wird die Biomasse und das reine Inokulum bestimmt Durch Subtraktion dieser Meßgrößen kann der Anteil der Polymerreste errechnet werden.

Zur Messung der Biomasse wird ebenfalls der gesamte Inhalt eines Kolbens aufgearbeitet. Hierzu wird eine Modifizierung der Adenosintriphosphat(ATP)-Bestimmung der Firma Lumac-3M verwendet: 10 Minuten nach der Zugabe des Reaktivreagenzes (Lumac) werden 2,5 ml einer 33 %igen Tetrabutylammoniumhydroxidlösung zugegeben. Dies führt zu einer vollständigen ATP-Freisetzung aus der gesamten Biomasse innerhalb von 30 Sekunden. Nach dieser Zeit kann der ATP-Gehalt nach der üblichen Luciferin/Luciferase-Reaktion nach Angaben von Lumac bestimmt werden. Zur Korrelation des ATP-Gehaltes mit der Trockensubstanz wird eine 24h-Kultur von Kl. planticola mitgemessen, deren ATP/TS-Verhältnis vorher bestimmt wird.

Als gut kompostierbar im erfindungsgemäßen Sinn werden alle Proben bezeichnet, die unter den obengenannten Bedingungen innerhalb von maximal zwei Wochen ein Biomassewachstum auf dem Polymeren von mindestens 30 mg/l ermöglichen.

Nicht kompostierbar im erfindungsgemäßen Sinn sind Proben, die unter den oben genannten Bedingungen innerhalb von maximal 2 Wochen ein Biomassewachstum von höchstens 15 mg/l ermöglichen.

Aus den erfindungsgemäßen Polyesteramiden in den Beispielen 1 bis 6 ließen sich nach bekannten technischen Verfahren Blasfolien, Fasern und Spritzgußartikel in jeglicher Form herstellen.

### 1. Polyesteramid aus Adipinsäure, Butandiol und Aminocapronsäure mit 45 Gew.-% Esteranteil

146 g (1 mol) Adipinsäure, 90 g (1 mol) 1,4-Butandiol und 131 g (0,1 mol) 6-Aminocapronsäure werden zusammengegeben und innerhalb von 30 min auf 120°C hochgeheizt. Nach 2 h bei dieser Temperatur wird aur 220°C hochgeheizt und Vakuum angelegt. Zum Schluß wird mit Ölpumpenvakuum 4 h bei 220°C auspolymerisiert. Man erhalt ein hellgelbes Produkt, das sich granulieren läßt. Der Schmelzpunkt laut DSC beträgt 125°C. Die relative Viskosität (1-gew.-%ig in m-Kresol bei 25°C) beträgt 2,2.

Das Molekulargewicht Mₙ beträgt 22 700, M_{w} 69 700 (gemessen in m-Kresol als Lösungsmittel, Polystyrol-Eichung). Im biologischen Abbautest zeigt das Material einen Mikrobenbewuchs von 90 mg in 14 Tagen.

### 2. Polyesteramid aus Adipinsäure, Butandiol und Aminocapronsäure mit 45 Gew.-% Esteranteil

146 g (1 mol) Adipinsäure, 180 g (2 mol) 1,4-Butandiol und 131 g ( mol) 6-Aminocapronsäure werden zusammengegeben und langsam auf 170°C hochgeheizt. Ab hier beginnt die Wasserabspaltung. Abhängig von der Heftigkeit der Destillation wird auf 220°C hochgeheizt und Vakuum angelegt. Zum Schluß wird mit Ölpumpenvakuum 4 h bei 240°C auspolymerisiert Man erhält ein hellgelbes Produkt, das sich granulieren läßt. Der Schmelzpunkt laut DSC beträgt 127°C. Die relative Viskosität (1-gew.-%ig in m-Kresol bei 25°C) beträgt 2,5.

Im biologischen Abbautest zeigt das Material einen Mikrobenbewuchs von 60 mg in 14 Tagen.

### 3. Polyesteramid aus Adipinsäure, Butandiol und ε-Caprolactam mit 50 Gew.-% Esteranteil

146 g (1 mol) Adipinsäure, 90 g (1 mol) 1,4-Butandiol und 200 g (1,77 mol) Caprolactam werden zusammengegeben und im Autoklaven unter Eigendruck langsam auf 170°C hochgeheizt. Nach einer Zeit von 3 h wird entspannt und Wasser abdestilliert. Abhängig von der Heftigkeit der Destillation wird auf 220°C hochgeheizt und Vakuum angelegt. Zum Schluß wird mit Ölpumpenvakuum 4 h bei 240°C auspolymerisiert. Man erhält ein hellgelbes Produkt, das sich granulieren läßt. Der Schmelzpunkt laut DSC betragt 130°C. Die relative Viskosität (1-gew.-%ig in m-Kresol bei 25°C) beträgt 2,9.

Im biologischen Abbautest zeigt das Material einen Mikrobenbewuchs von 74 mg in 14 Tagen.

### 4. Polyesteramid aus Adipinsäure, Hexandiol und Aminocapronsäure mit 50 Gew.-% Esteranteil

146 g (1 mol) Adipinsäure, 90 g (1 mol) 1,4-Butandiol und 232 g (1,77 mol) 6-Aminocapronsäure werden zusammengegeben und langsam auf 170°C hochgeheizt. Ab hier beginnt die Wasserabspaltung. Abhängig von der Heftigkeit der Destillation wird auf 220°C hochgeheizt und Vakuum angelegt. Zum Schluß wird mit Ölpumpenvakuum 4 h bei 240°C auspolymerisiert Man erhält ein hellgelbes Produkt, das sich granulieren laßt. Der Schmelzpunkt laut DSC beträgt 115°C. Die relative Viskosität (1-gew.-%ig in m-Kresol bei 25°C) beträgt 2,76.

Im biologischen Abbautest zeigt das Material einen Mikrobenbewuchs von 82 mg in 14 Tagen.

### 5. Polyesteramid aus Butandiol und dem 1:1 Salz aus Adipinsäure, Hexamethylendiamin ("AH-Salz") mit 60 Gew.-% Esteranteil

146 g (1 mol) Adipinsäure, 90 g (1 mol) 1,4-Butandiol und 154 g (0,59 mol) Salz aus Hexamethylendiamin und Adipinsäure ("AH-Salz") werden zusammengegeben und langsam auf 170°C hochgeheizt. Ab hier beginnt die Wasserabspaltung. Abhängig von der Heftigkeit der Destillation wird auf 220°C hochgeheizt und Vakuum angelegt. Zum Schluß wird mit Ölpumpenvakuum 4 h bei 240°C auspolymeriert. Man erhält ein hellgelbes Produkt, das sich granulieren läßt. Der Schmelzpunkt laut DSC beträgt 153°C. Die relative Viskosität (1-gew.-%ig in m-Kresol bei 25°C) beträgt 2,85.

Im biologischen Abbautest zeigt das Material einen Mikrobenbewuchs von 72 mg in 14 Tagen.

### 6. Polyesteramid aus einem säureterminierten Oligoester aus Adipinsäure und Butandiol sowie aus Hexamethylendiamin und ε-Caprolactam mit 40 Gew.-% Esteranteil

346 g (1 mol) säureterminierter Oligoester aus Butandiol und Adipinsäure (SZ 320), 116 g (1 mol) 1,6-Hexamethylendiamin und 72,3 g (0,64 mol) Caprolactam werden zusammengegeben und im Autoklaven unter Eigendruck langsam auf 170°C hochgeheizt. Nach einer Zeit von 3 Stunden wird entspannt und Wasser abdestilliert. Abhängig von der Heftigkeit der Destillation wird auf 220°C hochgeheizt und Vakuum angelegt. Zum Schluß wird mit Ölpumpenvakuum 4 Stunden bei 240°C auspolymerisiert Man erhält ein hellgelbes Produkt, das sich granulieren laßt. Der Schmelzpunkt laut DSC beträgt 123°C. Die relative Viskosität (1 gew.-%ig in m-Kresol bei 25°C) beträgt 2,8.

Im biologischen Abbautest zeigt das Material einen Mikrobenbewuchs von 102 mg in 14 Tagen.

### Vergleichsbeispiel 1 (reines PA 6)

Ein handelsübliches Polyamid 6 mit mittlerer Molmasse (ηᵣₑₗ von 2,9 in m-Kresol) und einem Schmelzpunkt nach DSC von 220°C zeigt keinerlei Abbau unter den o.a. Bedingungen.

### Vergleichsbeispiel 2 (reines Polyester)

146 g (1 mol) Adipinsäure und 90 g (1 mol) 1,4-Butandiol werden zu einem hochmolekularen Polyester umgesetzt. Das Polymer hat ein Molekulargewicht (Mₙ) von 12 500 (gemessen nach GPC, Polycarbonat-Eichung). Der Schmelzpunkt des Polymeren beträgt 52°C. Das Biomassewachstum beträgt 50 mg/g.

### Vergleichsbeispiel 3 (Schmelzkleber

Ein handelsüblicher Schmelzkleber mit einem Schmelzpunkt lt. DSC von 131°C zeigt unter den o.a. Bedingungen keinen Abbau.

## Patentansprüche

1. Kompostierbare thermoplastische verarbeitbare Copolymere, mit einem mittleren Molekulargewicht (Gewichtsmittel) von 10.000 bis 300.000, die dadurch gekennzeichnet sind, daß sie aliphatische Ester- und aliphatische Amidstrukturen in statischer Verteilung enthalten und Schmelzpunkte von mindestens 75°C aufweisen, der Gewichtsanteil der Esterstrukturen zwischen 30 und 80 Gew.-%, der Anteil der Amidstrukturen zwischen 70 und 20 Gew.-% beträgt.

2. Copolymere gemäß Anspruch 1, mit einem Gewichtsanteil der Esterstrukturen zwischen 30 und 70 %, der Anteil der Amidstrukturen zwischen 70 und 30 % beträgt.

3. Copolymere gemäß der Ansprüche 1 und 2 mit Esteranteilen zwischen 35 und 65 Gew.-%.

4. Copolymere gemäß Anspruch 3 mit Esteranteilen zwischen 35 und 55 Gew.-%.

5. Copolymere gemäß Anspruch 1 bis 4, erhältlich aus Monomeren ausgewählt aus: Dialkoholen, Dicarbonsäuren, Hydroxycarbonsäuren, Lactonen und Aminoalkoholen, cyclische Lactamen, ω-Aminocarbonsäuren und Mischungen (1:1 Salze) aus Dicarbonsäuren und Diaminen.

6. Copolymere gemäß Anspruch 1-5, wobei die Dialkohole ausgewählt sind aus Ethylenglykol, 1,4-Butandiol, 1,3-Propandiol, 1,6-Hexandiol und Diethylenglykol, Dicarbonsäuren ausgewählt sind aus Oxalsäure, Bernsteinsäure, Adipinsäure oder deren Ester, als Lacton Caprolacton ausgewählt ist, Aminoalkohole ausgewählt sind aus Ethanolamin und Propanolamin, 6-Aminohexansäure als Aminocarbonsäure, cyclische Lactame aus ε-Caprolactam und Laurinlactam, als ω-Aminocarbonsäure, Aminocapronsäure ausgewählt ist, Mischungen (1:1 Salze) aus Dicarbonsäure und Diamin sind ausgewählt aus Adipinsäure und Bernsteinsäure, bzw. aus Hexamethylendiamin und Diaminobutan.

7. Copolymere gemäß der Ansprüche 1-6 enthaltend Caprolactam, 1,4-Butandiol und Adipinsäure oder Adipinsäure und 1,6-Hexamethylendiamin.

8. Copolymere gemäß der Ansprüche 1-7 mit einem mittleren Molekulargewicht von 20.000 bis 150.000.

9. Copolymere gemäß der vorhergehenden Ansprüche enthaltend 0,1 bis 5 Gew.-% an Verzweigern.

10. Copolymere gemäß Anspruch 1 bis 9 enthaltend Zusatzstoffe ausgewählt aus anorganischen oder organischen Füll- bzw. Verstärkungsstoffen, mineralischen Füllstoffen, UV-Stabilisatoren, Antioxidantien, Pigmente, Farbstoffe, Nukleiermittel, Kristallisationsbeschleuniger bzw. -verzögerer, Fließhilfsmittel, Gleitmittel, Entformungsmittel, Flammschutzmittel sowie modifizierte bzw. nicht modifizierte Kautschuke.

11. Verwendung der Copolymere gemäß der vorhergehenden Ansprüche zur Herstellung von Folien und Formkörpern.

12. Verwendung der Copolymere gemäß der vorgehenden Ansprüche als Trennmittel, Weichmacher, Beschichtungsmaterial und Klebstoff.

13. Formkörper, Folien, Fasern, erhältlich aus Polyesteramiden gemäß der vorhergehenden Ansprüche.

## Claims

1. Compostable, thermoplastically processable copolymers with a molecular weight (weight average) of 10,000 to 300,000 which are characterised in that they contain aliphatic ester and aliphatic amide structures in a random distribution and have melting points of at least 75°C, the proportion by weight of ester structures being between 30 and 80 wt.% and the proportion of amide structures being between 70 and 20 wt.%.

2. Copolymers according to Claim 1, with a proportion by weight of ester structures between 30 and 70 %, the proportion of amide structures being between 70 and 30 %.

3. Copolymers according to Claims 1 and 2, with ester proportions between 35 and 65 wt.%.

4. Copolymers according to Claim 3 with ester proportions between 35 and 55 wt.%.

5. Copolymers according to Claims 1 to 4, obtainable from monomers chosen from: dialcohols, dicarboxylic acids, hydroxycarboxylic acids, lactones and aminoalcohols, cyclic lactams, ω-aminocarboxylic acids and mixtures (1:1 salts) of dicarboxylic acids and diamines.

6. Copolymers according to Claims 1 - 5, wherein the dialcohols are chosen from ethylene glycol, 1,4-butanediol, 1,3-propanediol, 1,6-hexanediol and diethylene glycol, the dicarboxylic acids are chosen from oxalic acid, succinic acid, adipic acid or their esters, caprolactone is chosen as a lactone, the aminoalcohols are chosen from ethanolamine and propanolamine, 6-aminohexanoic acid is chosen as an aminocarboxylic acid, cyclic lactams are chosen from ε-caprolactam and lauric lactam, aminocaproic acid is chosen as an ω-aminocarboxylic acid, mixtures (1:1 salts) of dicarboxylic acids and diamines are chosen from adipic acid and succinic acid and hexamethylene diamine and diaminobutane.

7. Copolymers according to Claims 1 - 6, containing caprolactam, 1,4-butanediol and adipic acid or adipic acid and 1,6-hexamethylene diamine.

8. Copolymers according to Claims 1 - 7 with an average molecular weight of 20,000 to 150,000.

9. Copolymers according to the preceding Claims containing 0.1 to 5 wt.% of branching agents.

10. Copolymers according to Claims 1 to 9, containing additives chosen from inorganic or organic fillers or reinforcement agents, mineral fillers, UV stabilisers, antioxidants, pigments, colorants, nucleating agents, crystallisation accelerators or delayers, flow control agents, lubricants, mould release agents, flame-proofing agents and modified or non-modified rubber.

11. Use of copolymers according to the preceding Claims for preparing films and moulded items.

12. Use of copolymers according to the preceding Claims as separating agents, plasticisers, coating materials and adhesives.

13. Moulded items, films, fibres obtainable from polyesteramides in accordance with the preceding Claims.

## Revendications

1. Copolymères aptes au traitement thermoplastique, qui peuvent être transformés en compost, possédant un poids moléculaire moyen (moyenne en poids) de 10.000 à 300.000, qui se caractérisent par le fait qu'ils contiennent des structures esters aliphatiques et des structures amides aliphatiques distribuées de manière statistique et présentent des points de fusion d'au moins 75°C, la fraction pondérale des structures esters représentant entre 30 et 80 % en poids et la fraction des structures amides représentant entre 70 et 20 % en poids.

2. Copolymères selon la revendication 1, dont la fraction pondérale des structures esters représente entre 30 et 70 %, la fraction des structures amides représentant entre 70 et 30 %.

3. Copolymères selon les revendications 1 et 2, dont les fractions esters représentent entre 35 et 65 % en poids.

4. Copolymères selon la revendication 3, dont les fractions esters représentent entre 35 et 55 % en poids.

5. Copolymères selon les revendications 1 à 4, que l'on obtient à partir de monomères choisis parmi le groupe comprenant: des alcools divalents, des acides dicarboxyliques, des acides hydroxycarboxyliques, des lactones et des aminoalcools, des lactames cycliques, des acides ω-amino-carboxyliques et des mélanges (sels 1:1) d'acides dicarboxyliques et de diamines.

6. Copolymères selon les revendications 1 à 5, dans lesquels les alcools divalents sont choisis parmi le groupe comprenant: l'éthylèneglycol, le 1,4-butanediol, le 1,3-propanediol, le 1,6-hexanediol et le diéthylèneglycol; les acides dicarboxyliques sont choisis parmi le groupe comprenant l'acide oxalique, l'acide succinique, l'acide adipique ou leurs esters; à titre de lactone, on sélectionne la caprolactone; les aminoalcools sont choisis parmi le groupe comprenant l'éthanolamine et la propanolamine; l'acide 6-aminohexanoïque est sélectionné à titre d'acide aminocarboxylique; les lactames cycliques sont choisis parmi le groupe comprenant l'ε-caprolactame et le lauryllactame; l'acide aminocaproïque est sélectionné à titre d'acide ω-aminocarboxylique; et les mélanges (sels 1:1) d'acides dicarboxyliques et de diamines sont choisis parmi l'acide adipique et l'acide succinique, respectivement parmi l'hexaméthylène-diamine et le diaminobutane.

7. Copolymères selon les revendications 1 à 6 contenant du caprolactame, du 1,4-butanediol et de l'acide adipique ou de l'acide adipique et de la 1,6-hexaméthylènediamine.

8. Copolymères selon les revendications 1 à 7 possédant un poids moléculaire moyen de 20.000 à 150.000.

9. Copolymères selon l'une quelconque des revendications précédentes contenant des agents de ramification à raison de 0,1 à 5 % en poids.

10. Copolymères selon les revendications 1 à 9 contenant des additifs choisis parmi le groupe comprenant: des substances de charge, respectivement de renforcement inorganiques ou organiques, des substances de charge minérales, des stabilisateurs contre l'effet de l'ultraviolet, des antioxydants, des pigments, des colorants, des agents de nucléation, des accélérateurs, respectivement des ralentisseurs de la cristallisation, des agents favorisant l'écoulement, des agents de glissement, des agents de démoulage, des agents de protection contre les flammes, ainsi que des caoutchoucs modifiés, respectivement non modifiés.

11. Utilisation des copolymères selon l'une quelconque des revendications précédentes pour la fabrication de feuilles et de corps moulés.

12. Utilisation des copolymères selon l'une quelconque des revendications précédentes à titre d'agents de démoulage, de plastifiants, de matières d'enduction et d'adhésifs.

13. Corps moulés, feuilles, fibres que l'on obtient à partir de polyesteramides selon l'une quelconque des revendications précédentes.
